# EUROPEAN PATENT SPECIFICATION

(11) **EP 2 684 718 B1**
(45) Date of publication and mention of the grant of the patent: **11.04.2018**
(21) Application number: 12176174.6
(22) Date of filing: 12.07.2012
(51) Int. Cl.: B60H 1/28, B62D 25/08

(54) **An air supply arrangement**
Luftzufuhranordnung
Agencement d'alimentation en air

(43) Date of publication of application: 15.01.2014
(73) Proprietor: Volvo Car Corporation, 40 531 Göteborg (SE)
(72) Inventor: Andersson, Erik, 433 64 Sävedalen (SE)
(74) Representative: Volvo Car Corporation

(56) References cited:
- DE-C1- 4 303 663
- DE-C1- 19 756 983
- US-A1- 2009 146 459
- US-A1- 2010 052 364

## Description

### TECHNICAL FIELD

The present invention relates to an air supply arrangement for a vehicle according to the preamble of claim 1. The invention further relates to a vehicle comprising such an air supply arrangement.

### BACKGROUND OF THE INVENTION

Many modern vehicles are provided with a climate control system, e.g. an HVAC system, i.e. a heating, ventilation and air conditioning system, in order to provide a comfortable climate in the passenger compartment. Typically, fresh air is supplied to the climate control system from ambient air outside of the vehicle through an air supply arrangement.

Sometimes, precipitation, such as rain, snow or hail, may be present in the outside air and may also further be carried by the air into the air supply arrangement. However, this is undesirable since, if moist or water enters the climate control system, there is a risk of a bad smell arising or water entering the passenger compartment. Moreover, the precipitation may reduce the efficiency of the climate control system, and there may even be a risk of damaging the climate control system. There is therefore a wish to, at least partly, prevent precipitation from entering the climate control system of the vehicle.

Patent document DE 43 03 663 C1 discloses an air supply arrangement for a vehicle. An air inlet is provided between the bonnet and the windscreen, through which fresh air can enter the air supply arrangement. The air stream passes above a cowl until it reaches the edge of the cowl, where the air stream changes direction by about 180 degrees when passing the edge. The edge of the cowl is provided with a precipitation collection means in order to prevent at least some of the precipitation caught by the cowl from reaching the climate control system of the vehicle.

However, the cowl creates a pressure drop for the air, which counteracts the air flow requirements for the climate control system. The air supply arrangement is therefore dimensioned large enough to allow sufficient air to enter the climate control system.

On the other hand, it is known that the larger the air supply arrangement is, the more space is needed in the vehicle for housing the air supply arrangement. Therefore, there is a desire to reduce the size of the air supply arrangement.
Moreover, there is also a desire to reduce the speed of air through the air supply arrangement. This reduces the energy used to operate the air supply arrangement. A reduced speed of the air also results in a reduced risk of carrying precipitation with the air.

Document US 2009/146459 A1 relates to a cowl structure including a cowl box having a partition panel joined to both rear and bottom walls thereof inside the cowl box. The partition panel constitutes, together with the rear and bottom walls, a hollow member portion extending in a vehicle width direction. An outside air introducing port is provided in the cowl box, for introducing outside air into the cowl box outside of the member portion. A communication port is provided in the partition panel, for allowing the inside and outside of the member portion to communicate with each other inside the cowl box. An air supplying port is provided in the rear wall at a location spaced upward from the bottom wall, for allowing the inside of the member portion and a vehicle compartment to communicate with each other. The communication port and the air supplying port overlap each other in the vehicle width direction.

Document US 2010/052364 A1 relates to a vehicle cowl box structure, which is provided basically with an air inlet, an air outlet, an air passageway and a flow restriction device. The air inlet is arranged to receive outside air. The air outlet is arranged to convey the outside air to a vehicle HVAC system. The air passageway extends between the air inlet and the air outlet to convey the outside air from the air inlet to the air outlet. The flow restriction device is disposed in the air passageway at a point between the air inlet and the air outlet. The flow restriction device is configured and arranged to automatically decrease airflow from the air inlet to the air outlet as the airflow through the air inlet increases.

Document DE 197 56983 C1 relates to an air inlet arrangement for a motor vehicle. The arrangement comprises an air inlet formed in the upper surface of the body work, an air passageway and a water separating baffle, which redirects the air stream around its end. In order to obtain a reduced flow resistance, a bypass may be opened, such that the air stream does not have to pass around the end of the water separating baffle. A control means is provided for the opening and closing of the bypass depending on the weather.

There is hence a need for an improved air supply arrangement, which is able to supply sufficient air to the climate control system, which at least partly prevents precipitation from reaching the climate control system, and which yet has a compact size.

### SUMMARY OF THE INVENTION

The object of the present invention is to overcome or ameliorate at least one of the disadvantages of the prior art, or to provide a useful alternative.
It is desirable to provide an air supply arrangement being able to supply sufficient air, at least partly preventing precipitation, and yet having a compact size.
The object above may be achieved by the invention according to claim 1.

The air supply arrangement is thus able to supply sufficient air, at least partly prevents precipitation, and yet has a compact size.

Further, since the air stream is split into at least two air stream portions, the speed of the air may be reduced as compared to prior art solutions using only one of the above-mentioned air stream portions.

The cowl is arranged within the housing, such that it redirects the entering air stream. The cowl may for example prevent the entering air stream from directly reaching the outlet of the air supply arrangement, which outlet is positioned at a rear wall of the housing and is adapted to convey the air to the climate control system of the vehicle. Thereby the cowl helps to prevent precipitation from reaching the climate control system. The cowl may be arranged such that its projection on the rear wall of the housing substantially covers the area of the outlet. However, due to the higher density of the precipitation, e.g. water drops, as compared to the air, the cowl is useful also for the case, wherein its projection on the rear wall does not cover a lower portion of the outlet, since the water drops in the second air stream portion will hit the rear wall of the housing below the outlet, although the air stream passes through the outlet. In a similar way, the cowl is useful also for the case, wherein its projection on the rear wall does not cover an upper portion of the outlet, since the water drops in the first air stream portion will hit the rear wall of the housing above the outlet, although the air stream passes through the outlet. In an alternative embodiment, the size and position of the cowl may be such that its projected area on the rear wall is larger than the outlet.

The cowl may be a separate unit which is attached to the housing during assembly of the air supply arrangement. In that case, the cowl may be slid downwards in corresponding grooves of the housing, thereby making it possible to mount the cowl without any use of special tools. In addition, or as an alternative, the cowl may be attached by any other known fastening means to the interior of the housing, such as a clip, a screw or a nut and bolt connection or by welding or gluing. Alternatively, the cowl may be integrated in the housing, e.g. by being formed in one unit with the housing.

The housing is normally provided with a drainage system comprising at least one drainage opening, such that precipitation trapped in the air supply arrangement can be drained from the air supply arrangement. The drainage opening is preferably provided with a valve arrangement, such that air is prevented from entering the air supply arrangement through the drainage opening.

The top portion of the housing comprises the air inlet and a portion located above an upper edge of the cowl. There may also be an intermediate portion in between the air inlet and the portion located above the upper edge of the cowl. The portion located above the upper edge of the cowl, may be air tight, thereby forming a path for first air stream portion. The top portion of the housing may have a flat upper side. Alternatively, a portion of it may be located vertically above or below another portion, for example the air inlet may be located vertically above, below or at the same level as the portion enclosing the upper edge of the cowl.

In an embodiment comprising one cowl, the first air stream portion passes above the cowl and the second air stream portion passes below the cowl.

In an embodiment comprising a stack of cowls arranged interspaced on top of each other inside the housing, the first air stream portion passes between the uppermost cowl and the top portion of the housing, and a second air stream portion passes below the lowest cowl. An additional air stream portion may pass in between at least two of the cowls in the stack.

In both cases, i.e. the air supply arrangement comprising one cowl or a plurality of cowls, there is an air stream portion passing above the uppermost cowl.

It would also be possible that the cowl comprises an opening, which allows air to pass through the cowl. In that case, another air stream portion will pass through that opening. Anyway, according to the invention, there is a first air stream portion passing between the cowl and a top portion of the housing, and a second air stream portion passing below the cowl.

The air stream portion passing between the cowl and a top portion of the housing is a desired air stream and thus not any leakage air. At least 5%, preferably at least 10% and most preferably at least 15% of the air stream entering the air supply arrangement may go in the first air stream portion. The amount of air going in the first air stream portion depends on the number of cowls. If a stack of cowls is used, the entering air stream will be split into a plurality of air stream portions and hence less air will go in the first air stream portion as compared to an embodiment having only one cowl. The amount of air going in the respective air stream portions may be selected by means of the design of the cowl and the housing. Further, the air going in the respective air stream portions may be controlled by flaps or valve arrangements.

A main portion of the cowl may form a substantially vertical wall when mounted in the vehicle, as seen in a cross-sectional view. This shape differs from that of many existing cowls, which comprises a substantially horizontal portion. The direction may deviate a few degrees, e.g. less than 15 degrees, from vertical. This makes the wall easy to assemble in the housing, e.g. by sliding it downwards in the above-mentioned grooves.

The cowl may have a curved shape when seen from above.

In an embodiment, the shape cowl is step-shaped when seen in cross-section from the side of the vehicle. It comprises a first substantially vertical portion, a second substantially vertical portion being substantially parallel to the first portion and an intermediate transition portion joining the first and second portions. The second substantially vertical portion is often larger than the first substantially vertical portion. The second substantially vertical portion may form the main portion of the cowl.

A portion of at least one lateral edge of the cowl may be attached to the housing. In case the main portion of the cowl forms a substantially vertical wall, when mounted in the vehicle, the lateral edge may also be substantially vertical and thus easy to slide e.g. in the above-mentioned grooves. The cowl may be attached to the housing only at at least a portion of one of or both of its lateral edges. This differs from many existing cowls, which are attached to the housing at their substantially horizontal portion.

The cowl may comprise a precipitation collection means arranged to collect precipitation carried by the first or second air stream portion from the outside of the vehicle and to remove the precipitation from that air stream portion. The precipitation collection means may be located at, or adjacent to, a lower or upper edge of the cowl. In case the cowl has a step-shaped cross-section, a precipitation collection means may be present at the intermediate transition portion. One or more precipitation collection means may be used. The precipitation collection means may be in the form of a gutter along the upper or lower edge of the cowl. The precipitation collection means may be connected to the above-mentioned drainage opening by a drainage system. Purely as an example, the above-mentioned stopper of the groove may be used for draining a precipitation collection means located at the lower edge of the cowl.
In an embodiment, wherein the cowl is to be slid in grooves during assembly of the air supply arrangement, the sliding movement may be stopped by a stopper at the lower end of the groove, which stopper may also form a part of the drainage system of the air supply arrangement. In addition, the stopper may be used to retain the cowl in position after assembly, such that the cowl cannot be displaced upwards. The stopper may for example snap fit to the cowl, e.g. around the intermediate transition portion, if the cowl is step-shaped, or around a precipitation collection means at the lower edge of the cowl.
In an embodiment, the upper edge of the cowl is located at a higher vertical level than the air inlet, when the air supply arrangement is mounted in the vehicle. This helps to prevent precipitation from reaching the outlet.

The upper edge of the cowl may be located at a position being rearward of the air inlet, when the air supply arrangement is mounted in the vehicle. This helps to prevent precipitation from reaching the outlet.
The housing may comprises a protrusion protruding into the housing to a position being vertically below the upper edge of the cowl, the protrusion being located forward of the upper edge of the cowl, when the air supply arrangement is mounted in the vehicle. This helps to prevent precipitation from reaching the outlet. The protrusion may be a wall protruding into the housing from example the rear edge of the air inlet. The protrusion may also be formed by a step in the shape of the top portion of the housing. The protrusion may be provided with a precipitation collection means.

The portion of the housing, which is located over the cowl, may be air tight, thereby forming a path for the first air stream portion.
By using an adapter between the housing and the air inlet, it is possible to use the same shape of the housing for different vehicle models having different heights of the bonnet.

The adapter may have the same cross-section as the air inlet. Alternatively, the adapter could also encompass the portion of the housing located above the upper edge or the whole top portion of the cowl. For some embodiments, the adapter preferably comprises one or more of the features comprised in the housing described above. Purely as an example, the adapter may comprise a protrusion or a precipitation collection means.

The adapter is preferably arranged such that an air-tight connection is formed to the rest of the housing.

Examples of suitable materials for the housing and the cowl are plastics, e.g. injection-moulded, and/or metal. The choice of material is preferably made having factors such as cost, production efficiency and vehicle safety in mind. If using injection-moulded plastics, the cowl and the housing may be moulded as one unit, or they may be moulded separately and then assembled.

In a second aspect of the present invention there is provided a vehicle comprising an air supply arrangement according to above.

### BRIEF DESCRIPTION OF THE DRAWINGS

The present invention will hereinafter be further explained by means of non-limiting examples with reference to the appended figures wherein:
- Fig. 1: is a schematic overview of a vehicle comprising an air supply arrangement according to the invention,
- Fig. 2: is a perspective, partly cross-sectional view of a first embodiment of the invention seen from within a passenger compartment,
- Fig. 3: is a cross-sectional side view of the first embodiment,
- Fig. 4: is a perspective view of a cross-section of a second embodiment of the invention,
- Fig. 5: is a cross-sectional side view of a third embodiment of the invention,
- Fig. 6: is a cross-sectional side view of a fourth embodiment of the invention,
- Fig. 7: is a cross-sectional side view of a fifth embodiment of the invention, and
- Fig. 8: is a cross-sectional side view of a sixth embodiment of the invention.

It should be noted that the appended drawings are not necessarily drawn to scale and that the dimensions of some features of the present invention may have been exaggerated for the sake of clarity.

### DETAILED DESCRIPTION OF PREFERRED EMBODIMENTS

The invention will, in the following, be exemplified by embodiments. It should however be realized that the embodiments are included in order to explain principles of the invention and not to limit the scope of the invention, as defined by the appended claims. Details from two or more of the embodiments may be combined with each other.

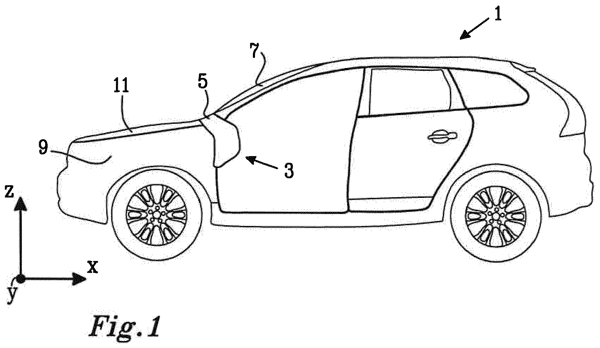

Figure 1 schematically illustrates a vehicle 1 comprising an air supply arrangement 3 according to the invention. Typically, the air supply arrangement 3 is arranged in a region 5 between a windshield 7 and an engine compartment 9 of the vehicle. Alternatively, at least parts of the air supply arrangement, such as the air inlet, may be arranged in a bonnet 11 of the vehicle 1.

Terms like vertical, horizontal, upper, lower, lateral, in front of and rearward of as used herein relate to when the air supply arrangement 3 according to the invention is mounted in the vehicle 1, which stands on substantially flat ground. However, the air supply arrangement may be manufactured and sold as a separate unit.

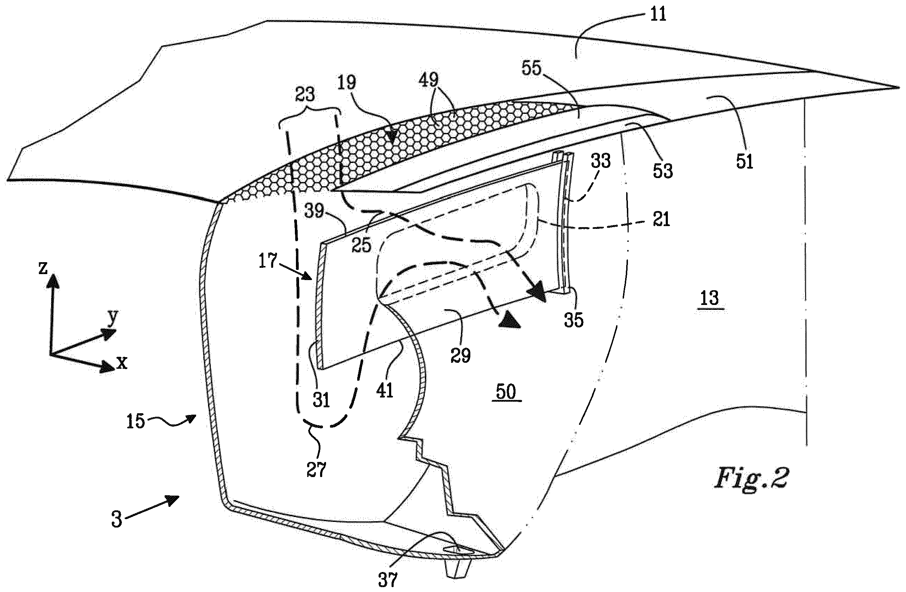

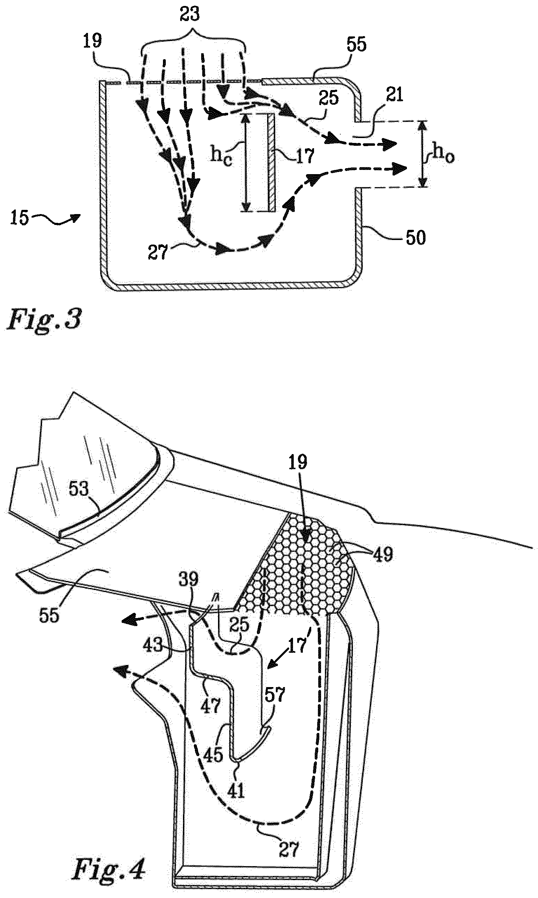

Figures 2 and 3 illustrate the air supply arrangement 3 according to a first embodiment of the invention in a perspective view seen from within a passenger compartment 13 of the vehicle, see Figure 2 and in a cross-sectional view, see Figure 3. The air supply arrangement 3 comprises a housing 15 and a cowl 17. The housing 15 has an air inlet 19 adapted to receive air from outside of the vehicle and an outlet 21 adapted to convey the air to a climate control system (not illustrated) of the vehicle 1. The cowl 17 is arranged inside the housing 15, such that the cowl 17 can split the entering air stream 23 into a first air stream portion 25 passing above the cowl 17 and a second air stream portion 27 passing below the cowl 17. The cowl 17 of the first embodiment has no opening and accordingly no air passes through the cowl 17. By allowing a portion of the entering air stream to go in the first air stream portion 25, it is possible to reduce the size of the air supply arrangement 3 as compared to existing air supply arrangements, wherein all the air goes in the correspondence to one of the air stream portions. For example, in the air supply arrangement of DE 43 03 663 C1 the air goes below the cowl, i.e. in the correspondence to the second air stream portion.

A main portion of the cowl 17 forms a wall 29, which has a substantially vertical cross-section. The direction may deviate a few degrees, e.g. less than 15 degrees, from vertical, in order to facilitate the assembly of the air supply arrangement 3. The cowl 17 is attached to the housing 15 at the lateral edges 31, 33 of the wall 29. The housing 15 comprises grooves 35, which are adapted to receive the lateral edges 31, 33. When assembling the air supply arrangement 3 the cowl 17 may thus be slid downwards in the grooves 35, thereby making it possible to mount the cowl 17 without any use of special tools. In addition, or as an alternative, the cowl 17 may be attached by any other known fastening means such as a clip, a screw or a nut and bolt connection or by welding or gluing. Alternatively, the cowl could be integrated in the housing 15, e.g. by being formed in one unit.

The first air stream portion 25 passes above an upper edge 39 of the housing 15 and is redirected by more than 90 degrees. The second air stream portion 27 passes below a lower edge 41 of the cowl 17 and is also redirected by more than 90 degrees. The air passing closest to the cowl 17 is redirected by about 180 degrees.

The housing 15 is provided with a drainage system comprising a drainage opening 37, such that precipitation trapped in the air supply arrangement 3 can be drained from the housing 15. The drainage opening 37 is preferably provided with a valve arrangement (not illustrated), such that air is prevented from entering the air supply arrangement through the drainage opening 37.

The housing 15 forms a separate unit which is sealed from the engine compartment 9 of the vehicle 1. Thereby, no air may leak from the engine compartment 9 into the air supply arrangement 3. This is beneficial from an energy point of view, since air coming from the engine compartment would, assuming a warm engine, have a higher temperature than the outside air. Therefore, in operating conditions of the climate control system, when there is a need to cool the air to provide a comfortable climate in the passenger compartment, warm air from the engine compartment 9 would result in a need for additional cooling, which consumes energy. However, with the air supply arrangement 3 according to the invention as shown in Figures 2 and 3 comprising a drainage opening with a valve system, substantially no air can leak from the engine compartment 9 and thus such additional cooling can be avoided. In particular, the temperature level triggering the air conditioning to start may be raised by avoiding leakage of warm air into the air supply arrangement 3. In addition, the risk of allowing noise and/or smell from the engine compartment 9 into the air supply arrangement 3 is avoided or at least reduced.

The air inlet 19 is covered by a hole structure 49, in the illustrated embodiment exemplified by a perforated plate. The air inlet 19 may be integrated into a windshield base panel 51, as illustrated. In such case, the housing 15 is preferably connected to the windshield base panel 51 with a tight sealing such that substantially no air can leak into the air supply arrangement 3 besides the air stream 23 entering through the air inlet 19. A water deflector 53 is also shown, which prevents at least a main portion of the water flowing along the windshield from entering the air inlet 19. The hole structure 49 is located forward of the upper edge 39 of the cowl 17, such that the portion 55 of the housing 15 enclosing the upper edge 39 is air tight, thus forming a duct for the first air stream portion 25.

The cowl 17 is located such that it prevents the entering air stream 23 from directly reaching the outlet 21 of the air supply arrangement 3, which outlet 21 is positioned at a rear wall 50 of the housing 15 and is adapted to convey the air to the climate control system of the vehicle. Thereby the cowl 17 helps to prevent precipitation from reaching the climate control system. In the first embodiment, the cowl 17 is arranged such that it is large enough to cover the area of the outlet 21, in Figure 3 represented by the height h_{c} of the cowl 17 overlapping and being greater than the height hₒ of the outlet 21, both heights being measured in the z-direction of the air supply arrangement 3 when mounted in the vehicle. However, due to the higher density of the precipitation, e.g. water drops, as compared to the air, the cowl 17 would also work in case it does not cover a lower portion of the outlet 21, since the water drops will due to gravity hit the rear wall 50 of the housing 15 below the outlet 21, although the second air stream portion 27 passes through the outlet. The lower edge 41 of the cowl 17 may thus be located above the lower edge of the outlet 21.

Figure 4 shows a cross-sectional view of a second embodiment of an air supply arrangement 3. For simplicity, the same reference numbers are used for features, which are also present in the first embodiment shown in Figures 2 and 3. The first air stream portion 25 passes above the cowl 17' and the second air stream portion 27 passes below the cowl 17'. The first air stream portion 25 changes direction, in the illustrated case by more than 90 degrees, when passing the upper edge 39 of the cowl. The second air stream portion 27 also changes direction by more than 90 degrees when passing the lower edge 41 of the cowl 17'. It changes from from essentially vertically downwards to essentially vertically upwards, i.e. by about 180 degrees.

Similar as for the first embodiment, the air inlet 19 is covered by a hole structure 49 and a water deflector 53 prevents at least a main portion of the water flowing along the windshield from entering the air inlet 19. The hole structure 49 is located forward of the upper edge 39 of the cowl 17', such that the portion 55 of the housing 15 enclosing the upper edge 39 is air tight, thus forming a duct for the first air stream portion 25.

The cowl 17' is step-shaped and comprises a first substantially vertical portion 43, a second substantially vertical portion 45 being parallel to said first portion 43 and an intermediate transition portion 47 joining said first and second portions 43, 45. The second substantially vertical portion 45 is larger than the first portion 43 and forms a substantially vertical wall. The upper edge 39 of the cowl 17' is located rearwards of the air inlet 19. Due to the step-shaped form of the cowl 17', the upper edge 39 of the cowl 17' is also located rearward of the lower edge 41. The step-shape of the cowl 17' makes the housing 15 easier to fit in the vehicle 1.

Figure 4 further illustrates that the cowl 17' comprises a precipitation collection means 57, in this embodiment exemplified by a gutter around the lower edge 41 of the cowl 17'. The precipitation collection means 57 may be formed as an integral part of the cowl 17', as illustrated, or it may be a separate part mounted to the cowl. The precipitation collection means 57 is arranged to collect the precipitation being carried by the second air stream portion 27. Preferably, the precipitation collection means 57 is inclined in relation to a horizontal plane of the vehicle 1 resulting in that any collected water flow in the gutter towards the lowest point, where a drainage arrangement (not illustrated) may be connected. Another precipitation collection means may be positioned at the upper edge 39 of the cowl 17' arranged to collect the precipitation being carried by the first air stream portion 25. A similar precipitation collection means could also be used in the first embodiment.

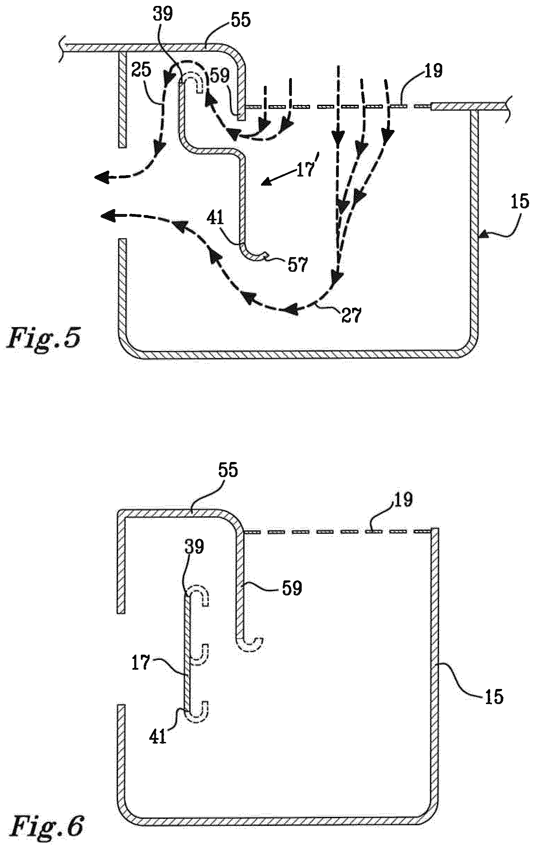

Figure 5 illustrates a third embodiment of the invention. The cowl 17' is step-shaped similar as for the second embodiment illustrated in Figure 4. The portion 55 of the housing 15 enclosing the upper edge 39 of the cowl 17' is located at a vertical level being above that of the air inlet 19. In addition, the housing 15 comprises a protrusion, here in the form of an additional wall 59 protruding into the housing 15 to a position being vertically below said upper edge 39 of the cowl 17'. The additional wall 59 is located forward of the upper edge 39 of the cowl 17', such that a precipitation trap is formed for the first air stream portion 25, catching at least part of the precipitation carried by the first air stream portion 25 and thus preventing it from entering the climate control system of the vehicle. The additional wall 59 is preferably arranged such that the water may drop down along the cowl 17' to the precipitation collection means 57 at the lower edge 41 of the cowl 17'. Alternatively, a precipitation collection means could be located at a lower edge of the additional wall 59. There may also be a precipitation collection means positioned at the upper edge 39 of the cowl 17', see dashed lines. The precipitation collection means is preferably connected to the drainage system of the housing 15.

In a fourth embodiment, illustrated in Figure 6, the portion 55 of the housing 15 enclosing the upper edge 39 of the cowl 17 is at the same vertical level as the air inlet 19. The cowl 17 comprises a substantially vertical wall, similar as for Figure 2. Some alternative positions for the precipitation collection means are marked by dashed lines in Figure 6: at the upper edge 39 of the cowl 17, at the lower edge 41 of the cowl 17, somewhere along the cowl 17 or at the lower edge of the additional wall 59.

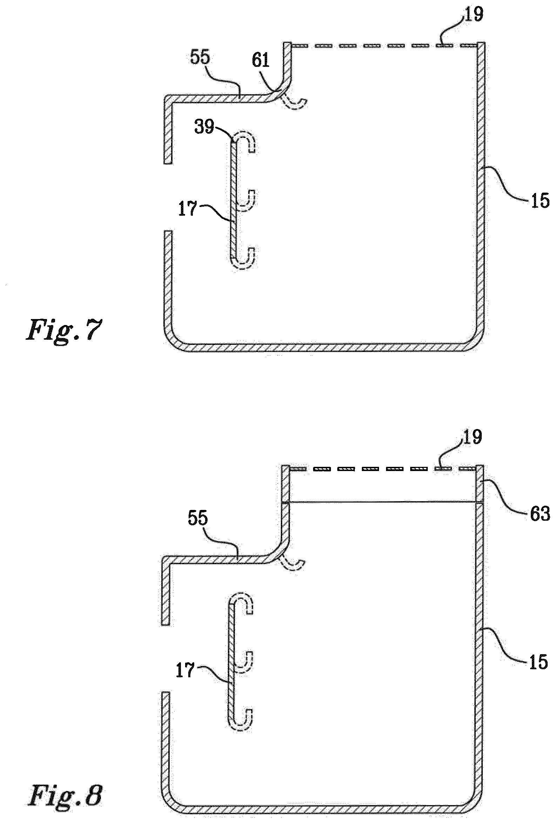

In a fifth embodiment, illustrated in Figure 7 the protrusion forming the precipitation for the first air stream portion 25 is formed by a step 61 in the cross-sectional shape of the portion 55 of the housing 15 enclosing the upper edge 39 of the cowl 17. The vertical level of the air inlet 19 is above the level of the portion 55 enclosing the upper edge 39. Some alternative positions for the precipitation collection means are marked by dashed lines, similar as for Figure 6.

By using an adapter 63 in between the housing 15 and the air inlet 19, it is possible to use the same shape of the housing 15 for different vehicle models having different heights of the bonnet. The adapter 63 may have the same cross-section as the air inlet 19, as illustrated by Figure 8 showing the air supply arrangement 3 of Figure 7 combined with the adapter 63.

Other adapters may be used in combination with other embodiments of the invention. The adapter may have the same cross-section as the air inlet 19. Alternatively, the adapter could also encompass the portion 55 of the housing 15 located above the upper edge 39 or the whole top portion of the cowl. This would for example be suitable together with the fourth embodiment of Figure 6. For some embodiments, the adapter preferably comprises one or more of the features comprised in the housing 15 in any of the first to fifth embodiments presented above. Purely as an example, the adapter may comprise an additional wall 59 like the additional wall 59 of the third or fourth embodiments or a precipitation collection means.

The adapter is preferably arranged such that an air-tight connection is formed between the adapter and the rest of the housing.

The dimensions of the housing 15 are preferably adapted to the dimensions of the vehicle. Purely as an example, the length of housing 15 may be between 10 and 100 centimetres, preferably between 20 and 80 centimetres and most preferably between 30 and 60 centimetres, with the length dimension of the housing 15 being the same as the width dimension of the vehicle, i.e. along the y axis of Figure 2. Further, the width of the housing 15 may be between 5 and 50 centimetres, preferably between 10 and 40 centimetres and most preferably between 15 and 30 centimetres, with the width dimension of the housing 15 being the same as the length dimension of the vehicle, i.e. along the x axis of Figure 2. Moreover, the height of the housing 15 may be between 10 and 50 centimetres, preferably between 15 and 50 centimetres and most preferably between 15 and 35 centimetres, with the height dimension being the same as the height dimension of the vehicle, i.e. along the z axis of Figure 2. The dimensions of the housing 15 make up the dimensions of the air supply arrangement 3.

The dimensions of the cowl 17 are adapted to the dimensions of the housing 15. Purely as an example, the length of the cowl 17, in the y-direction of Figure 2, may be between 10 and 50 centimetres, preferably between 15 and 40 centimetres. The width of the cowl 17, in the x-direction of Figure 2, may be between 5 and 15 centimetres if step-shaped as in the second or third embodiments. The height, in the z-direction of Figure 2, may be between 5 and 30 centimetres, preferably between 5 and 20 centimetres.
The precipitation collection means 57 may protrude by between 0.2 and 4 centimetres from the walls of the cowl 17, preferably by between 0.3 and 2 centimetres and most preferably between 0.5 and 1 centimetre.
Further modifications of the invention within the scope of the appended claims are feasible. As such, the present invention should not be considered as limited by the embodiments and figures described herein.

## Claims

1. An air supply arrangement (3) for a vehicle (1), said air supply arrangement (3) comprising
- a housing (15), said housing (15) comprising an air inlet (19) adapted to receive an air stream (23) from outside of the vehicle (1) and an outlet (21) adapted to convey said air stream to a vehicle climate control system, and
- a cowl (17, 17') provided within said housing (15), said cowl (17, 17') being arranged within said housing (15), such that it redirects said air stream,
said cowl (17, 17') being arranged such that said air stream is split into at least two air stream portions, whereof a first air stream portion (25) passes between said cowl (17, 17') and a top portion of said housing (15), and a second air stream portion (27) passes below said cowl (17, 17'), and
wherein said cowl (17, 17') changes the direction of said first air stream portion (25) by at least 90 degrees, when passing an upper edge (39) of said cowl (17, 17')
**characterized in that**
said second air stream portion (27) is redirected by more than 90 degrees when passing below a lower edge (41) of said cowl (17, 17').

2. The air supply arrangement (3) according to claim 1 comprising one cowl (17, 17'),
wherein said first air stream portion (25) passes above said cowl (17, 17') and said second air stream portion (27) passes below said cowl (17, 17').

3. The air supply arrangement (3) according to claim 1, comprising a stack of cowls arranged interspaced on top of each other inside said housing (15), such that said first air stream portion (25) passes between the uppermost cowl and a top portion of said housing (15), and a second air stream portion (27) passes below the lowest cowl and an additional air stream portion passes in between at least two of said cowls in said stack.

4. The air supply arrangement (3) according to any one of the preceding claims,
wherein at least 5%, preferably at least 10% and most preferably at least 15% of said air stream (23) entering said air supply arrangement (3) goes in said first air stream portion (25).

5. The air supply arrangement (3) according to any one of the preceding claims,
wherein a main portion of said cowl (17, 17') forms a substantially vertical wall (29) when mounted in the vehicle (1).

6. The air supply arrangement (3) according to any one of the preceding claims,
wherein said cowl (17') when seen in cross-section from the side of the vehicle (1) comprises a first substantially vertical portion (43), a second substantially vertical portion (45) being substantially parallel to said first portion (43) and an intermediate transition (47) portion joining said first (43) and second (45) portions.

7. The air supply arrangement (3) according to any one of the preceding claims,
wherein a portion of at least one lateral edge (31, 33) of said cowl (17, 17') is attached to said housing (15).

8. The air supply arrangement (3) according to claim 7, wherein said cowl (17, 17') is only attached to said housing (15) at at least a portion of one of or both of its lateral edges (31, 33).

9. The air supply arrangement (3) according to any one of the preceding claims,
wherein said cowl (17, 17') further comprises a precipitation collection means (57) arranged to collect precipitation carried by said first or second air stream portion (25, 27) from the outside of said vehicle (1) and to remove said precipitation from said air stream portion (25, 27).

10. The air supply arrangement (3) according to any one of the preceding claims,
wherein said upper edge (39) of said cowl (17, 17') is located at a higher vertical level than said air inlet (19).

11. The air supply arrangement (3) according to any one of the preceding claims,
wherein said upper edge (39) of said cowl (17, 17') is located at a position being rearward of said air inlet (19).

12. The air supply arrangement (3) according to any one of the preceding claims,
wherein said housing (15) comprises a protrusion (59) protruding into said housing (15) to a position being vertically below said upper edge (39) of said cowl (17, 17'), said protrusion (59) being located forward of an upper edge (39) of said cowl (17, 17').

13. The air supply arrangement (3) according to any one of the preceding claims,
wherein the portion (55) of said housing (15), which is located over said cowl (17, 17'), is air tight.

14. A vehicle (1) comprising an air supply arrangement (3) according to any one of the preceding claims.

## Patentansprüche

1. Luftzufuhranordnung (3) für ein Fahrzeug (1), wobei die Luftzufuhranordnung (3) umfasst:
- ein Gehäuse (15), wobei das Gehäuse (15) einen Lufteinlass (19), der zum Empfangen eines Luftstroms (23) von außerhalb des Fahrzeugs (1) vorgesehen ist, und einen Auslass (21) umfasst, der zum Fördern des Luftstroms zu einem Klimaanlagensystem eines Fahrzeugs vorgesehen ist, und
- einen Windlauf (17, 17'), der in dem Gehäuse (15) bereitgestellt ist, wobei der Windlauf (17, 17') innerhalb des Gehäuses (15) so angeordnet ist, dass er den Luftstrom umlenkt,
wobei der Windlauf (17, 17') so angeordnet ist, dass der Luftstrom in mindestens zwei Luftstromanteile geteilt wird, wobei ein erster Luftstromanteil (25) zwischen dem Windlauf (17, 17') und einem oberen Anteil des Gehäuses (15) entlang läuft und ein zweiter Luftstromanteil (27) unterhalb des Windlaufs (17, 17') entlang läuft, und
wobei der Windlauf (17, 17') die Richtung des ersten Luftstromanteils (25) um mindestens 90 Grad ändert, wenn er an einem oberen Rand (39) des Windlaufs (17, 17') entlang läuft,
**dadurch gekennzeichnet, dass**
der zweite Luftstromanteil (27) um mehr als 90 Grad umgelenkt wird, wenn er unterhalb eines unteren Randes (41) des Windlaufs (17, 17') entlang läuft.

2. Luftzufuhranordnung (3) nach Anspruch 1, umfassend einen Windlauf (17, 17'), wobei der erste Luftstromanteil (25) oberhalb des Windlaufs (17, 17') entlang läuft und der zweite Luftstromanteil (27) unterhalb des Windlaufs (17, 17') entlang läuft.

3. Luftzufuhranordnung (3) nach Anspruch 1, umfassend einen Stapel von Windläufen, die zueinander beabstandet übereinander im Inneren des Gehäuses (15) angeordnet sind, so dass der erste Luftstromanteil (25) zwischen dem obersten Windlauf und einem oberen Anteil des Gehäuses (15) entlang läuft und ein zweiter Luftstromanteil (27) unterhalb des untersten Windlaufs entlang läuft, und ein zusätzlicher Luftstromanteil zwischen mindestens zweien der Windläufe in dem Stapel entlang läuft.

4. Luftzufuhranordnung (3) nach einem der vorhergehenden Ansprüche, wobei mindestens 5 %, vorzugsweise mindestens 10 % und am meisten bevorzugt mindestens 15 % des Luftstroms (23), der in die Luftzufuhranordnung (3) eintritt, in den ersten Luftstromanteil (25) gehen.

5. Luftzufuhranordnung (3) nach einem der vorhergehenden Ansprüche, wobei ein Hauptanteil des Windlaufs (17, 17') eine im Wesentlichen vertikale Wand (29) bildet, wenn er in dem Fahrzeug (1) montiert ist.

6. Luftzufuhranordnung (3) nach einem der vorhergehenden Ansprüche, wobei der Windlauf (17') im Querschnitt von der Seite des Fahrzeugs (1) aus gesehen einen ersten im Wesentlichen vertikalen Anteil (43), einen zweiten im Wesentlichen vertikalen Anteil (45), der im Wesentlichen parallel zu dem ersten Anteil (43) ist, und einen dazwischen liegenden Übergangsanteil (47) umfasst, der den ersten (43) und den zweiten (45) Anteil verbindet.

7. Luftzufuhranordnung (3) nach einem der vorhergehenden Ansprüche, wobei ein Anteil von mindestens einem seitlichen Rand (31, 33) des Windlaufs (17, 17') an dem Gehäuse (15) befestigt ist.

8. Luftzufuhranordnung (3) nach Anspruch 7, wobei der Windlauf (17, 17') nur an mindestens einem Anteil von einem oder beiden seiner seitlichen Ränder (31, 33) an dem Gehäuse (15) befestigt ist.

9. Luftzufuhranordnung (3) nach einem der vorhergehenden Ansprüche, wobei der Windlauf (17, 17') ferner ein Niederschlagssammelmittel (57) umfasst, das zum Sammeln von Niederschlag, der von dem ersten oder zweiten Luftstromanteil (25, 27) von außerhalb des Fahrzeugs (1) herangetragen wird, und zum Entfernen des Niederschlags aus dem Luftstromanteil (25, 27) angeordnet ist.

10. Luftzufuhranordnung (3) nach einem der vorhergehenden Ansprüche, wobei der obere Rand (39) des Windlaufs (17, 17') sich auf einer höheren vertikalen Ebene als der Lufteinlass (19) befindet.

11. Luftzufuhranordnung (3) nach einem der vorhergehenden Ansprüche, wobei der obere Rand (39) des Windlaufs (17, 17') sich an einer Position befindet, die hinter dem Lufteinlass (19) liegt.

12. Luftzufuhranordnung (3) nach einem der vorhergehenden Ansprüche, wobei das Gehäuse (15) einen Vorsprung (59) umfasst, der in dem Gehäuse (15) in eine Position vorspringt, die vertikal unterhalb des oberen Randes (39) des Windlaufs (17, 17') liegt, wobei der Vorsprung (59) vor einem oberen Rand (39) des Windlaufs (17, 17') angeordnet ist.

13. Luftzufuhranordnung (3) nach einem der vorhergehenden Ansprüche, wobei der Anteil (55) des Gehäuses (15), der über dem Windlauf (17, 17') angeordnet ist, luftdicht ist.

14. Fahrzeug (1), das eine Luftzufuhranordnung (3) gemäß einem der vorhergehenden Ansprüche umfasst.

## Revendications

1. Agencement (3) d'amenée d'air pour un véhicule (1), ledit agencement (3) d'amenée d'air comprenant :
- un boîtier (15), ledit boîtier (15) comprenant une entrée d'air (19) apte à recevoir un flux d'air (23) provenant de l'extérieur du véhicule (1) et une sortie (21) apte à convoyer ledit flux d'air vers un système de régulation de climatisation du véhicule, et
- un auvent (17, 17') disposé à l'intérieur dudit boîtier (15), ledit auvent (17, 17') étant agencé à l'intérieur dudit boîtier (15) de telle sorte qu'il réoriente ledit flux d'air, ledit auvent (17, 17') étant agencé de telle sorte que ledit flux d'air est divisé en au moins deux parties de flux d'air,
dont une première partie (25) de flux d'air passe entre ledit auvent (17, 17') et la partie supérieure dudit boîtier (15), et la seconde partie (27) de flux d'air passe en dessous dudit auvent (17, 17'), et
dans lequel ledit auvent (17, 17') modifie la direction de ladite première partie (25) de flux d'air d'au moins 90 degrés quand elle passe devant le bord supérieur (39) dudit auvent (17, 17'),
**caractérisé en ce que** ladite seconde partie (27) de flux d'air est réorientée de plus de 90 degrés quand elle passe au-dessous du bord inférieur (41) dudit auvent (17, 17').

2. Agencement (3) d'amenée d'air selon la revendication 1, comprenant un auvent (17, 17'), dans lequel ladite première partie (25) de flux d'air passe au-dessus dudit auvent (17, 17') et ladite seconde partie (27) de flux d'air passe en dessous dudit auvent (17, 17').

3. Agencement (3) d'amenée d'air selon la revendication 1, comprenant une pile d'auvents disposés espacés les uns sur les autres à l'intérieur dudit boîtier (15), de telle sorte que ladite première partie (25) de flux d'air passe entre l'auvent du haut et la partie supérieure dudit boîtier (15), une deuxième partie (27) de flux d'air passe en dessous de l'auvent le plus bas et une partie supplémentaire de flux d'air passe entre au moins deux desdits auvents dans ladite pile.

4. Agencement (3) d'amenée d'air selon l'une quelconque des revendications précédentes, dans lequel au moins 5 %, de préférence au moins 10 % et idéalement au moins 15 % dudit flux d'air (23) entrant dans ledit agencement (3) d'amenée d'air va dans ladite première partie (25) de flux d'air.

5. Agencement (3) d'amenée d'air selon l'une quelconque des revendications précédentes, dans lequel une partie principale dudit auvent (17, 17') constitue une paroi (29) sensiblement verticale quand elle est montée dans le véhicule (1).

6. Agencement (3) d'amenée d'air selon l'une quelconque des revendications précédentes, dans lequel ledit auvent (17'), vu en coupe depuis le côté du véhicule (1), comprend une première partie (43) sensiblement verticale, une deuxième partie (45) sensiblement verticale qui est sensiblement parallèle à ladite première partie (43) et une partie intermédiaire (47) de transition unissant lesdites première (43) et deuxième (45) parties.

7. Agencement (3) d'amenée d'air selon l'une quelconque des revendications précédentes, dans lequel une partie d'au moins un bord latéral (31, 33) dudit auvent (17, 17') est fixée audit boîtier (15).

8. Agencement (3) d'amenée d'air selon la revendication 7, dans lequel ledit auvent (17, 17') n'est fixé audit boîtier (15) qu'au niveau d'au moins une partie d'un ou des deux de ses bords latéraux (31, 33).

9. Agencement (3) d'amenée d'air selon l'une quelconque des revendications précédentes, dans lequel ledit auvent (17, 17') comprend en outre un moyen de collecte (57) de précipitation agencé pour recueillir les précipitations portées par ladite première ou ladite seconde partie (25, 27) de flux d'air provenant de l'extérieur dudit véhicule (1) et pour éliminer ladite précipitation de ladite partie (25, 27) de flux d'air.

10. Agencement (3) d'amenée d'air selon l'une quelconque des revendications précédentes, dans lequel ledit bord supérieur (39) dudit auvent (17, 17') est situé à un niveau vertical plus élevé que ladite entrée d'air (19).

11. Agencement (3) d'amenée d'air selon l'une quelconque des revendications précédentes, dans lequel ledit bord supérieur (39) dudit auvent (17, 17') est situé à un emplacement qui est à l'arrière de ladite entrée d'air (19).

12. Agencement (3) d'amenée d'air selon l'une quelconque des revendications précédentes, dans lequel ledit boîtier (15) comprend une protubérance (59) faisant saillie dans ledit boîtier (15) jusqu'à un emplacement qui est verticalement au-dessous dudit bord supérieur (39) dudit auvent (17, 17'), ladite protubérance (59) étant située en avant du bord supérieur (39) dudit auvent (17, 17').

13. Agencement (3) d'amenée d'air selon l'une quelconque des revendications précédentes, dans lequel la partie (55) dudit boîtier (15) qui est située au-dessus dudit auvent (17, 17') est étanche à l'air.

14. Véhicule (1) comprenant un agencement (3) d'amenée d'air selon l'une quelconque des revendications précédentes.
